# EUROPEAN PATENT APPLICATION

(11) **EP 3 686 419 A1**
(43) Date of publication of application: **29.07.2020**
(21) Application number: 20152847.8
(22) Date of filing: 21.01.2020
(51) Int. Cl.: F02M 25/08, B60K 15/03, B60K 15/035, F02M 27/08, F02M 33/00, F02M 37/00, F02M 37/54

(54) **FUEL SUPPLY APPARATUS FOR INTERNAL COMBUSTION ENGINE**

(30) Priority: 23.01.2019 JP 2019009587
(71) Applicant: TOYOTA JIDOSHA KABUSHIKI KAISHA, Toyota-shi, Aichi-ken, 471-8571 (JP)
(72) Inventor: INAMI, Norio, Aichi-ken, 471-8571 (JP)
(74) Representative: D Young & Co LLP

(57) **Abstract**

A fuel supply apparatus (1) for an internal combustion engine includes: a fuel tank (2) that stores a liquid fuel; a mixed gas space defining portion provided outside the fuel tank (2) and defining a mixed gas space that is filled with a mixed gas containing an evaporated fuel and air; a fine bubble fuel generator (4) including a liquid fuel inlet (4iL) that communicates with a liquid region (2L) of the fuel tank (2) and a mixed gas inlet (4iG) that communicates with the mixed gas space defining portion and configured to generate a fine bubble fuel containing fine bubbles of the mixed gas from the liquid fuel supplied from the fuel tank (2) and the mixed gas supplied from the mixed gas space defining portion; and a fuel supply unit (5) that supplies the fine bubble fuel generated by the fine bubble fuel generator (4) to the internal combustion engine.

## Description

### BACKGROUND OF THE INVENTION

### 1. Field of the Invention

The invention relates to a fuel supply apparatus for an internal combustion engine.

### 2. Description of Related Art

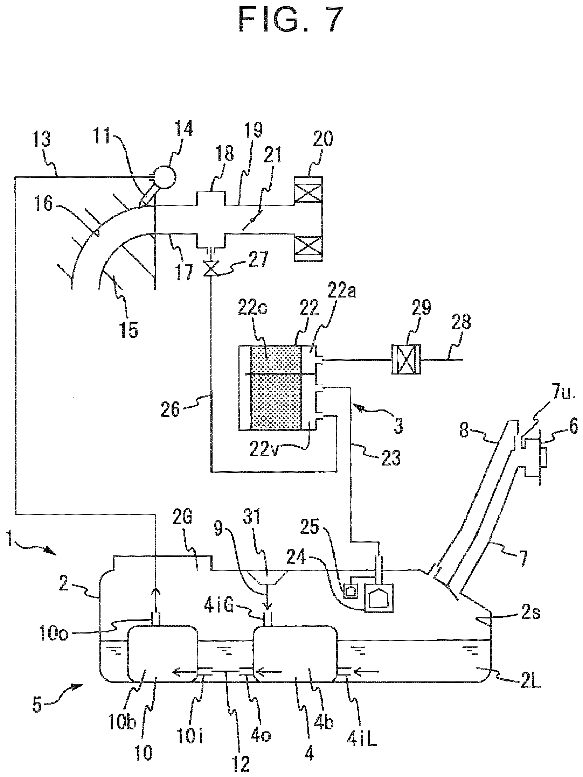

A known fuel supply apparatus includes: a fuel tank for storing a liquid fuel; a fine bubble mixing unit for mixing fine bubbles into the liquid fuel; and a fuel injection valve for injecting the liquid fuel, in which the fine bubbles are mixed by the fine bubble mixing unit, to an internal combustion engine (see, for example, Japanese Unexamined Patent Application Publication No. 2010-37966 (JP 2010-37966 A)). In this fuel supply apparatus, the fine bubble mixing unit is composed of an ejector that injects air into the liquid fuel to mix the fine bubbles into the liquid fuel, and an air intake pipe that supplies air to the ejector (see FIG. 7). The ejector is a device that mixes air sucked from the outside into the liquid fuel, and is attached to a fuel suction port of a low-pressure fuel pump. The air intake pipe has one end open to a space inside the fuel tank and the other end coupled to the ejector.

### SUMMARY OF THE INVENTION

Vibrations that occur during traveling of the vehicle may cause movement or turbulence in the liquid fuel in the fuel tank. In JP 2010-37966 A, however, since the air intake pipe is open to the space inside the fuel tank, liquid fuel in the fuel tank may flow into the air intake pipe. As a result, there is a possibility that air is not supplied to the ejector and the liquid fuel containing fine bubbles is not generated satisfactorily.

This may be suppressed by making the air intake pipe open to the outside of the fuel tank, that is, to the atmosphere, for example. However, although not clearly stated in JP 2010-37966 A, it is considered that the air in the space inside the fuel tank contains an evaporated fuel and the liquid fuel containing fine bubbles of the evaporated fuel is supplied to the internal combustion engine. It is also considered that the liquid fuel containing the fine bubbles of the evaporated fuel contributes to good combustion. However, when the air intake pipe is made open to the atmosphere, there is a possibility that the liquid fuel containing the fine bubbles of the evaporated fuel cannot be generated, and thus good combustion cannot be obtained.

An aspect of the invention relates to a fuel supply apparatus for an internal combustion engine. The fuel supply apparatus for an internal combustion engine includes a fuel tank, a mixed gas space defining portion, a fine bubble fuel generator, and a fuel supply unit. The fuel tank is configured to store a liquid fuel. The mixed gas space defining portion is provided outside the fuel tank and defines a mixed gas space filled with a mixed gas containing an evaporated fuel and air. The fine bubble fuel generator includes a liquid fuel inlet that communicates with a liquid region of the fuel tank and a mixed gas inlet that communicates with the mixed gas space defining portion, and is configured to generate a fine bubble fuel, which is a liquid fuel containing fine bubbles of the mixed gas, from the liquid fuel supplied from the fuel tank and the mixed gas supplied from the mixed gas space defining portion. The fuel supply unit is configured to supply the fine bubble fuel generated by the fine bubble fuel generator to the internal combustion engine.

The fuel supply apparatus according to the above aspect may further include a breather pipe. The breather pipe may connect a gas region of the fuel tank and a fuel supply pipe of the fuel tank to each other. The mixed gas space defining portion may be the breather pipe. The mixed gas inlet of the fine bubble fuel generator may communicate with the breather pipe.

The fuel supply apparatus according to the above aspect may further include a canister, a vapor pipe, and a purge pipe. The canister may be configured to temporarily store the evaporated fuel. The vapor pipe may connect a gas region of the fuel tank and a vapor chamber of the canister to each other. The purge pipe may connect the vapor chamber of the canister and an intake passage downstream of a throttle valve of the internal combustion engine to each other. The mixed gas space defining portion may be the vapor pipe. The mixed gas inlet of the fine bubble fuel generator may communicate with the vapor pipe.

The fuel supply apparatus according to the above aspect may further include a canister, a vapor pipe, and a purge pipe. The canister may be configured to temporarily store the evaporated fuel. The vapor pipe may connect a gas region of the fuel tank and a vapor chamber of the canister to each other. The purge pipe may connect the vapor chamber of the canister and an intake passage downstream of a throttle valve of the internal combustion engine to each other. The mixed gas space defining portion may be the purge pipe. The mixed gas inlet of the fine bubble fuel generator may communicate with the purge pipe.

The fuel supply apparatus according to the above aspect may further include a canister, a vapor pipe, and a purge pipe. The canister may be configured to temporarily store the evaporated fuel. The vapor pipe may connect a gas region of the fuel tank and a vapor chamber of the canister to each other. The purge pipe may connect the vapor chamber of the canister and an intake passage downstream of a throttle valve of the internal combustion engine to each other. The mixed gas space defining portion may be the vapor chamber. The mixed gas inlet of the fine bubble fuel generator may communicate with the vapor chamber.

In the fuel supply apparatus according to the above aspect, the mixed gas space defining portion may be the purge pipe, and the mixed gas inlet of the fine bubble fuel generator may communicate with the purge pipe.

In the fuel supply apparatus according to the above aspect, the mixed gas space defining portion may be the vapor chamber, and the mixed gas inlet of the fine bubble fuel generator may communicate with the vapor chamber.

In the fuel supply apparatus according to the above aspect, an outlet of the fine bubble fuel generator may communicate with an inlet of the fuel supply unit.

In the fuel supply apparatus according to the above aspect, an outlet of the fine bubble fuel generator may communicate with the liquid region of the fuel tank.

The fuel supply apparatus according to the above aspect may further include a switching valve. The switching valve may be configured to allow an outlet of the fine bubble fuel generator to communicate with either one or both of an inlet of the fuel supply unit and the liquid region of the fuel tank.

In the fuel supply apparatus according to the above aspect, the fine bubble fuel generator may be accommodated in the fuel tank.

In the fuel supply apparatus according to the above aspect, the fine bubble fuel may be a liquid fuel containing ultra-fine bubbles of the mixed gas.

According to the above aspect, the liquid fuel containing the evaporated fuel can be more satisfactorily generated, and thus better combustion can be attained.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic overall view of an internal combustion engine of an embodiment according to the present disclosure;
FIG. 2 is a schematic overall view of an internal combustion engine of another embodiment according to the present disclosure;
FIG. 3 is a schematic overall view of an internal combustion engine of still another embodiment according to the present disclosure;
FIG. 4 is a schematic overall view of an internal combustion engine of still another embodiment according to the present disclosure;
FIG. 5 is a schematic partial view of an internal combustion engine of still another embodiment according to the present disclosure;
FIG. 6 is a schematic overall view of an internal combustion engine of still another embodiment according to the present disclosure;
FIG. 7 is a schematic overall view of an internal combustion engine of still another embodiment according to the present disclosure;
FIG. 8 is a schematic overall view of a gas-liquid separator in the embodiment according to the present disclosure;
FIG. 9 is a schematic overall view of an internal combustion engine of still another embodiment according to the present disclosure;
FIG. 10 is a schematic partial plan view of an internal combustion engine of still another embodiment according to the present disclosure; and
FIG. 11 is a schematic partial plan view of an internal combustion engine of still another embodiment according to the present disclosure.

### DETAILED DESCRIPTION OF EMBODIMENTS

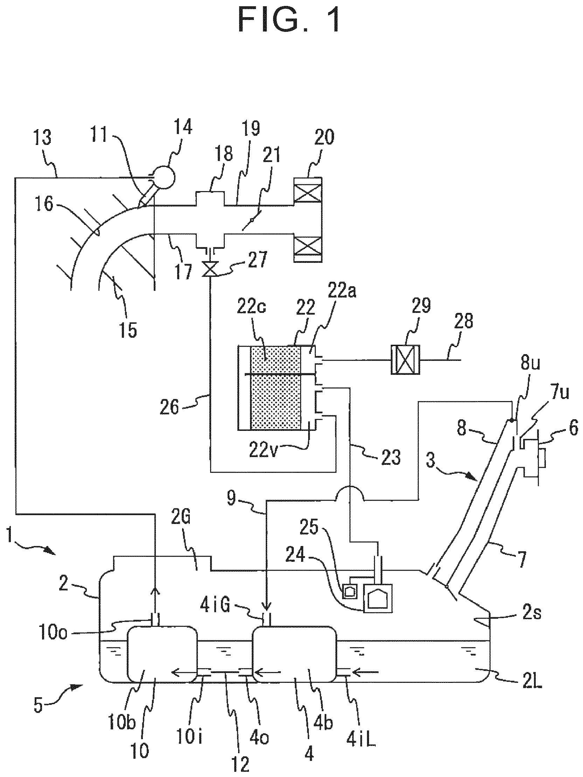

Referring to FIG. 1, a fuel supply apparatus 1 for an internal combustion engine of an embodiment according to the present disclosure includes a fuel tank 2, a mixed gas space 3, a fine bubble fuel generator 4, and a fuel supply unit 5.

The fuel tank 2 in the embodiment according to the present disclosure includes an internal space 2s, and is configured to store a liquid fuel in the internal space 2s. That is, a fuel supply pipe 7 leading to a fuel supply port 6 communicates with the internal space 2s of the fuel tank 2, and when the liquid fuel is supplied to the internal space 2s via the fuel supply pipe 7, a liquid region 2L occupied by the liquid fuel is formed in the lower part of the internal space 2s. On the other hand, a gas region 2G occupied by an evaporated fuel and air is formed in the upper part of the internal space 2s. Examples of the liquid fuel include gasoline, light oil, and alcohol.

In the embodiment according to the present disclosure, a breather pipe 8 is provided that couples the gas region 2G and the fuel supply pipe 7 to each other. The breather pipe 8 in the embodiment according to the present disclosure is coupled to an upper end 7u of the fuel supply pipe 7. The breather pipe 8 releases gas from the gas region 2G during fuel supply, so as to facilitate a quick inflow of the liquid fuel into the internal space 2s of the fuel tank 2.

The mixed gas space 3 in the embodiment according to the present disclosure is provided outside the fuel tank 2, filled with a mixed gas containing the evaporated fuel and air, and defined by a mixed gas space defining portion. In other words, the mixed gas space defining portion is provided outside the fuel tank 2 and defines the mixed gas space 3. The mixed gas space 3 will be described later.

The fine bubble fuel generator 4 in the embodiment according to the present disclosure includes a body 4b, a liquid fuel inlet 4iL, a mixed gas inlet 4iG, and an outlet 4o that are connected to the body 4b. In the embodiment of the present disclosure, the body 4b of the fine bubble fuel generator 4, namely, the fine bubble fuel generator 4 as a whole is accommodated in the internal space 2s of the fuel tank 2. As a result, it is easy to handle the fine bubble fuel generator 4. In addition, a piping configuration of the fine bubble fuel generator 4 is simplified. In another embodiment (not illustrated), the body 4b is disposed outside the fuel tank 2.

The liquid fuel inlet 4iL in the embodiment according to the present disclosure is disposed at a bottom portion of the internal space 2s of the fuel tank 2 so as to communicate with the liquid region 2L. The mixed gas inlet 4iG in the embodiment according to the present disclosure communicates with the mixed gas space 3 via a connecting pipe 9. The fine bubble fuel generator 4 in the embodiment according to the present disclosure is configured to generate a fine bubble fuel from the liquid fuel supplied from the fuel tank 2 via the liquid fuel inlet 4iL and the mixed gas supplied from the mixed gas space 3 via the mixed gas inlet 4iG. In the embodiment according to the present disclosure, the fine bubble fuel is a liquid fuel containing fine bubbles, more preferably, ultra-fine bubbles of the mixed gas. The fine bubbles are air bubbles with a diameter (equivalent to spheres) less than 100 µm, and the ultra-fine bubbles are air bubbles with a diameter of less than 1 µm (ISO 20298-1). Air bubbles with a diameter of 1 to 100 µm are referred to as microbubbles. In the embodiment according to the present disclosure, the term "liquid fuel containing fine bubbles" refers to a liquid fuel containing air bubbles, of which a diameter distribution peaks at less than 100 µm. The term "liquid fuel containing ultra-fine bubbles" refers to a liquid fuel containing air bubbles, of which a diameter distribution peaks at less than 1 µm. The liquid containing microbubbles is cloudy, and the liquid containing ultra-fine bubbles is transparent.

Examples of a method for generating fine bubbles or a fine bubble fuel include an ultrasonic method, a swirling method, a pressurization and dissolution method, and a micropore method. In the ultrasonic method, cavitation is caused in the liquid using ultrasonic waves and the gas in the liquid is expanded to form fine bubbles, especially ultra-fine bubbles. In the swirling method, the gas and the liquid are mixed, followed by swirling at high speed to form fine bubbles. In the pressurization and dissolution method, the gas is pressurized to be dissolved in the liquid and then the pressure is released at once to form fine bubbles. In the micropore method, the gas is pressurized to pass through micropores such as orifices to form fine bubbles. The generated fine bubble fuel is discharged from the outlet 4o.

In the embodiment according to the present disclosure, the fuel supply unit 5 is configured to supply the fine bubble fuel generated by the fine bubble fuel generator 4 to the internal combustion engine. The fuel supply unit 5 in the embodiment according to the present disclosure includes a fuel pump 10 and a fuel injection valve 11. The fuel pump 10 in the embodiment according to the present disclosure includes a body 10b and an inlet 10i and an outlet 10o that are connected to the body 10b. The body 10b in the embodiment according to the present disclosure is accommodated in the internal space 2s of the fuel tank 2. In another embodiment (not illustrated), the body 10b is disposed outside the fuel tank 2. The inlet 10i in the embodiment according to the present disclosure is connected to the outlet 4o of the fine bubble fuel generator 4 via a connecting pipe 12. The inlet 10i in the embodiment according to the present disclosure constitutes an inlet of the fuel supply unit 5. The outlet 10o in the embodiment according to the present disclosure is connected to the fuel injection valve 11 via the fuel feed pipe 13 and the common rail 14 in this order. The fuel injection valve 11 in the embodiment according to the present disclosure is attached to a cylinder head 15 of the engine body, and is configured to inject fuel into an intake port 16. In another embodiment (not illustrated), the fuel injection valve 11 is configured to inject fuel into a combustion chamber (not illustrated).

In the embodiment according to the present disclosure, the intake port 16 is connected to a surge tank 18 via an intake branch pipe 17, and the surge tank 18 is connected to an air cleaner 20 via an intake supply pipe 19. A throttle valve 21 is disposed in the intake supply pipe 19.

In the embodiment according to the present disclosure, a canister 22 configured to temporarily store the evaporated fuel is provided. The canister 22 in the embodiment according to the present disclosure includes an adsorption layer 22c containing an active carbon etc., a vapor chamber 22v located on one side of the adsorption layer 22c, and an air chamber 22a located on the other side of the adsorption layer 22c. The vapor chamber 22v in the embodiment according to the present disclosure communicates with the gas region 2G of the fuel tank 2 via a vapor pipe 23. The vapor pipe 23 in the embodiment according to the present disclosure communicates with the gas region 2G via a float-type onboard refueling vapor recovery (ORVR) valve 24 and a cutoff valve 25. The vapor pipe 23 in another embodiment (not illustrated) communicates with the gas region 2G via one of or none of the ORVR valve 24 and the cutoff valve 25. The vapor chamber 22v in the embodiment according to the present disclosure also communicates with the surge tank 18, for example, via a purge pipe 26. An electromagnetic purge control valve 27 is disposed in the purge pipe 26. The air chamber 22a in the embodiment according to the present disclosure communicates with the atmosphere via an air pipe 28. An air filter 29 is disposed in the air pipe 28.

In the embodiment according to the present disclosure, the purge control valve 27 is closed when the internal combustion engine is stopped. As a result, the evaporated fuel in the gas region 2G of the fuel tank 2 flows, together with air in the gas region 2G, into the vapor chamber 22v of the canister 22 via the vapor pipe 23, then reaches the adsorption layer 22c, and is adsorbed to the adsorption layer 22c. When the purge control valve 27 is opened at the time of operation of the internal combustion engine, air flows into the air chamber 22a of the canister 22 via the air pipe 28 due to a negative pressure generated in the surge tank 18, and then passes through the adsorption layer 22c. At this time, the evaporated fuel is removed from the adsorption layer 22c. The evaporated fuel is supplied, together with air, into the surge tank 18 via the vapor chamber 22v, the purge pipe 26 and the purge control valve 27, and is burnt in the combustion chamber together with fuel from the fuel injection valve 11. The evaporated fuel flowing into the vapor chamber 22v from the vapor pipe 23 at the time of operation of the internal combustion engine flows into the purge pipe 26 without being adsorbed by the adsorption layer 22c.

As can be understood from the above description, an internal space of the breather pipe 8, an internal space of the vapor pipe 23, an internal space of the vapor chamber 22v, an internal space of the purge pipe 26, especially a section of the purge pipe 26 upstream of the purge control valve 27, are filled with the mixed gas, that is, a mixture of the evaporated fuel and air.

In the embodiment shown in FIG. 1, the mixed gas space 3 is formed of the internal space of the breather pipe 8, and the mixed gas inlet 4iG of the fine bubble fuel generator 4 communicates with the internal space of the breather pipe 8 via the connecting pipe 9. In particular, in the embodiment illustrated in FIG. 1, the connecting pipe 9 is connected to an upper portion 8u of the breather pipe 8. In the embodiment illustrated in FIG. 1, the connecting pipe 9 is connected to the breather pipe 8 while facing downward.

As a result, the fine bubble fuel containing fine bubbles of the evaporated fuel is generated. Thus, in the internal combustion engine, better combustion can be attained. The fine bubbles of the evaporated fuel may be present directly in the liquid fuel, or may be present in the fine bubbles of the air.

Moreover, the mixed gas inlet 4iG of the fine bubble fuel generator 4 is connected to the mixed gas space 3 outside the fuel tank 2. Therefore, even when movement occurs in the liquid fuel in the fuel tank 2, inflow of the liquid fuel to the mixed gas inlet 4iG is restricted. Especially in the embodiment shown in FIG. 1, the connecting pipe 9 is connected to the upper portion 8u of the breather pipe 8. Therefore, the inflow of the liquid fuel to the mixed gas inlet 4iG is further restricted. In addition, the connecting pipe 9 is connected to the breather pipe 8 while facing downward. Therefore, the inflow of the liquid fuel to the mixed gas inlet 4iG is further restricted. Thus, in the fine bubble fuel generator 4, the fine bubble fuel containing fine bubbles of the evaporated fuel is more satisfactorily generated.

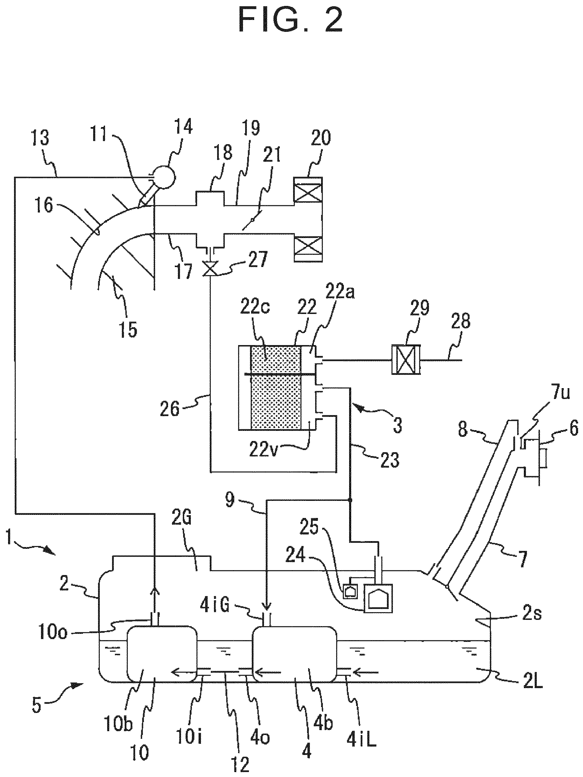

FIG. 2 illustrates another embodiment according to the present disclosure. In the embodiment shown in FIG. 2, the mixed gas space 3 is formed of the internal space of the vapor pipe 23, and the mixed gas inlet 4iG of the fine bubble fuel generator 4 communicates with the internal space of the vapor pipe 23 via the connecting pipe 9. Even in this embodiment, the fine bubble fuel containing fine bubbles of the evaporated fuel is generated more satisfactorily.

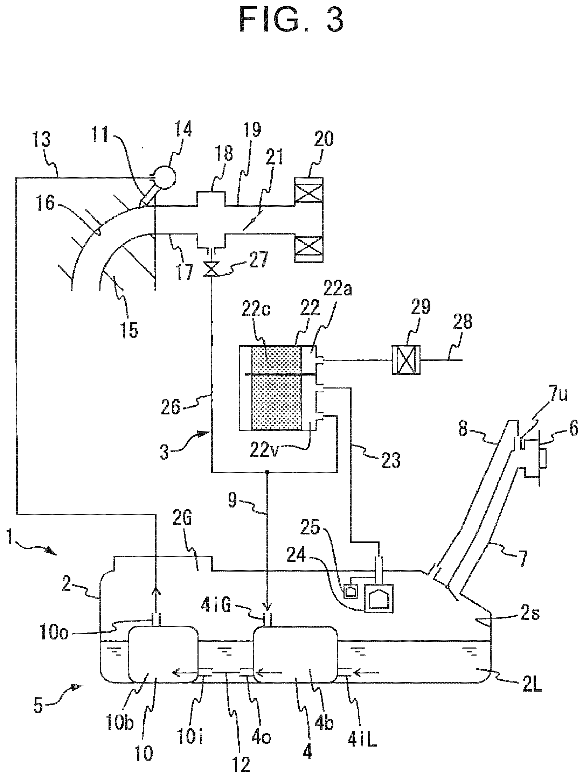

FIG. 3 illustrates still another embodiment according to the present disclosure. In the embodiment shown in FIG. 3, the mixed gas space 3 is formed of the internal space of the purge pipe 26, and the mixed gas inlet 4iG of the fine bubble fuel generator 4 communicates with the internal space of the purge pipe 26 via the connecting pipe 9. Especially in the embodiment shown in FIG. 3, the mixed gas inlet 4iG communicates with the internal space of the part of the purge pipe 26 upstream of the purge control valve 27. Even in this embodiment, the fine bubble fuel containing fine bubbles of the evaporated fuel is generated more satisfactorily.

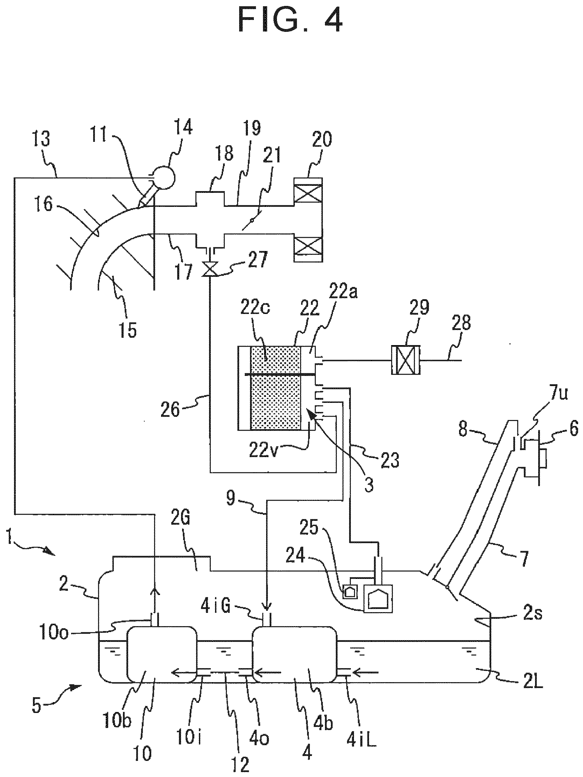

FIG. 4 illustrates still another embodiment according to the present disclosure. In the embodiment shown in FIG. 4, the mixed gas space 3 is formed of the internal space of the vapor chamber 22v, and the mixed gas inlet 4iG of the fine bubble fuel generator 4 communicates with the internal space of the vapor chamber 22v via the connecting pipe 9. Even in this embodiment, the fine bubble fuel containing fine bubbles of the evaporated fuel is generated more satisfactorily.

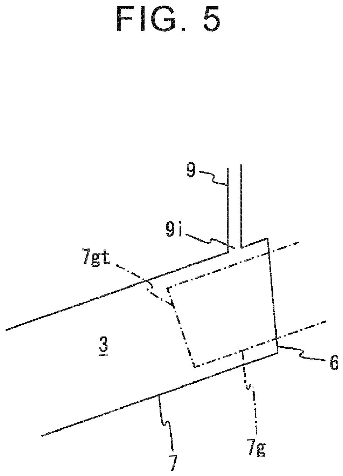

FIG. 5 illustrates still another embodiment according to the present disclosure. In the embodiment shown in FIG. 5, the mixed gas space 3 is formed of the internal space of the fuel supply pipe 7, and the mixed gas inlet 4iG of the fine bubble fuel generator 4 communicates with the internal space of the fuel supply pipe 7 via the connecting pipe 9. Even in this embodiment, the fine bubble fuel containing fine bubbles of the evaporated fuel is generated more satisfactorily. In the embodiment shown in FIG. 5, an inlet 9i of the connecting pipe 9 connected to the fuel supply pipe 7 is disposed upstream of an end 7gt of a fuel supply gun 7g in the flow of the liquid fuel. The fuel supply gun 7g is inserted into the fuel supply pipe 7 for fuel supply. In the embodiment shown in FIG. 5, the inlet 9i of the connecting pipe 9 is provided above the fuel supply pipe 7 so as to be open downward. Accordingly, the inflow of the liquid fuel into the connecting pipe 9 during fuel supply is further restricted.

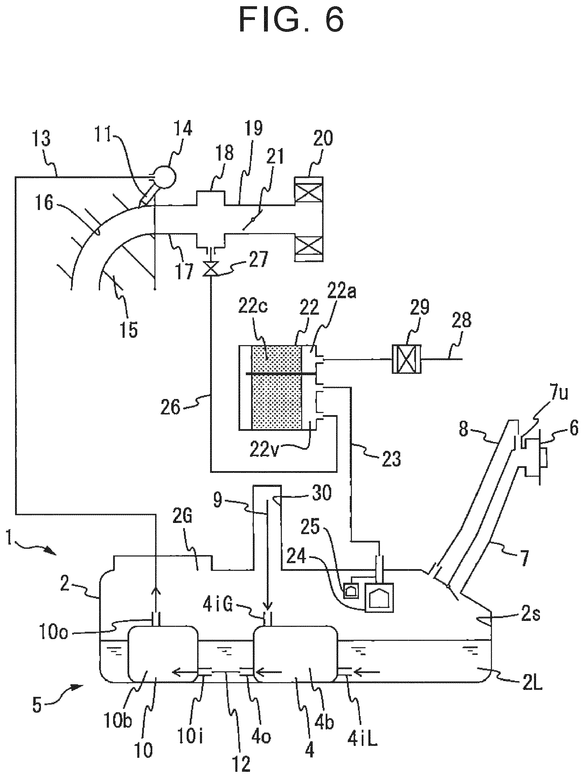

FIG. 6 illustrates still another embodiment according to the present disclosure. In the embodiment shown in FIG. 6, the fuel tank 2 includes an extended space 30 that extends the gas region 2G. The extended space 30 extends upward so as to be away from the liquid region 2L. In the embodiment shown in FIG. 6, in addition, the connecting pipe 9 connected to the mixed gas inlet 4iG of the fine bubble fuel generator 4 is open to the extended space 30. Accordingly, the inflow of the liquid fuel into the connecting pipe 9 is further restricted. In addition, since the extended space 30 is also filled with the mixed gas, the fine bubble fuel containing fine bubbles of the evaporated fuel is generated more satisfactorily. In this case, by making the shape of the extended space 30 more complicated, the inflow of liquid fuel into the connecting pipe 9 can be further restricted.

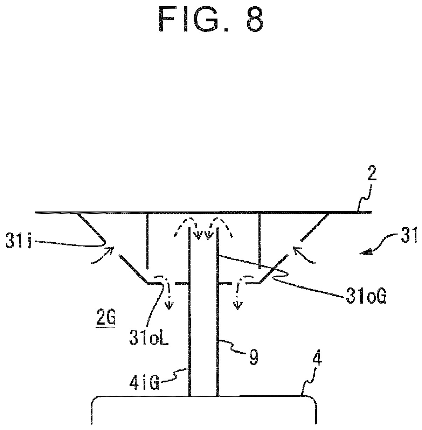

FIG. 7 illustrates still another embodiment of the present disclosure. In the embodiment shown in FIG. 7, a gas-liquid separator 31 is provided in the gas region 2G of the fuel tank 2. An example of the gas-liquid separator 31 is shown in FIG. 8. The gas-liquid separator 31 illustrated in FIG. 8 includes inlets 31i and liquid outlets 31oL that communicate with the gas region 2G of the fuel tank 2, and a gas outlet 31oG that communicates with the connecting pipe 9 connected to the mixed gas inlet 4iG of the fine bubble fuel generator 4. A gas-liquid mixture that flows into the gas-liquid separator 31 via the inlets 31i (indicated by solid arrows) is separated into a liquid component and a gas component. The separated liquid component, namely, the liquid fuel, is discharged outside the gas-liquid separator 31 via the liquid outlets 31oL (indicated by long dashed short dashed-line arrows), and is returned to the liquid region 2L. The separated gas component, namely, the mixed gas, flows into the connecting pipe 9 via the gas outlet 31oG.

Accordingly, the inflow of the liquid fuel into the connecting pipe 9 is further restricted. Thus, the fine bubble fuel containing fine bubbles of the evaporated fuel is more satisfactorily generated.

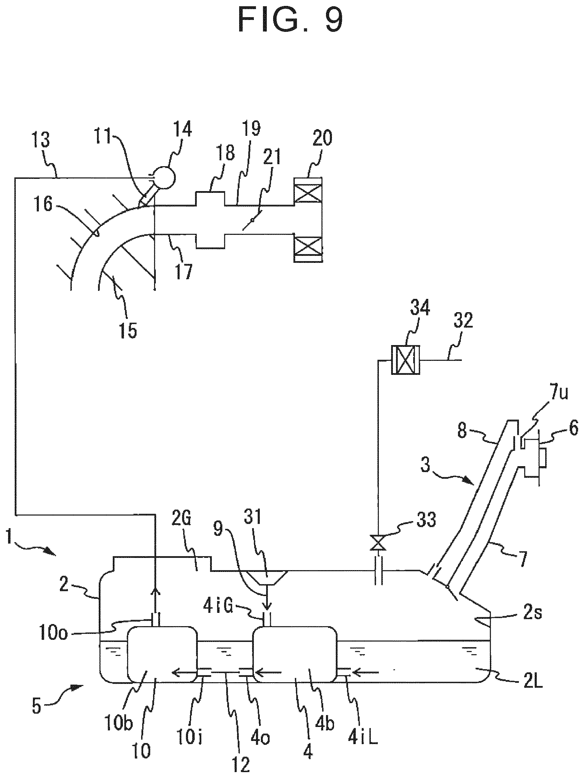

FIG. 9 illustrates still another embodiment of the present disclosure. The embodiment illustrated in FIG. 9 differs from the embodiments illustrated in FIGS. 7 and 8 in that a canister, a vapor pipe and a purge pipe are not provided, and an air introduction pipe 32 that allows the gas region 2G of the fuel tank 2 to communicate with, for example, the atmosphere is provided. An on-off valve 33 and an air filter 34 are disposed in the air introduction pipe 32 of the embodiment illustrated in FIG. 9. In one example, the on-off valve 33 is normally closed. When the pressure in the internal space 2s of the fuel tank 2 becomes lower than a predetermined pressure, the on-off valve 33 is opened to introduce air into the internal space 2s of the fuel tank 2. This retrains the pressure in the fuel tank 2 from becoming excessively low.

In the embodiment illustrated in FIG. 9, when the fine bubble fuel generator 4 is operated, the evaporated fuel present in the gas region 2G is supplied to the fine bubble fuel generator 4 via the gas-liquid separator 31. Accordingly, when the fine bubble fuel generator 4 is continuously operated, for example, the evaporated fuel in the gas region 2G of the fuel tank 2 is reduced. Therefore, no canister is provided in the embodiment shown in FIG. 9. Thus, the structure of the fuel supply apparatus 1 is simplified, and a space required to mount the fuel supply apparatus 1 is reduced. In another embodiment (not illustrated), the capacity of the canister or the adsorption layer is reduced. This also applies to the embodiments illustrated in FIG. 1 to FIG. 8.

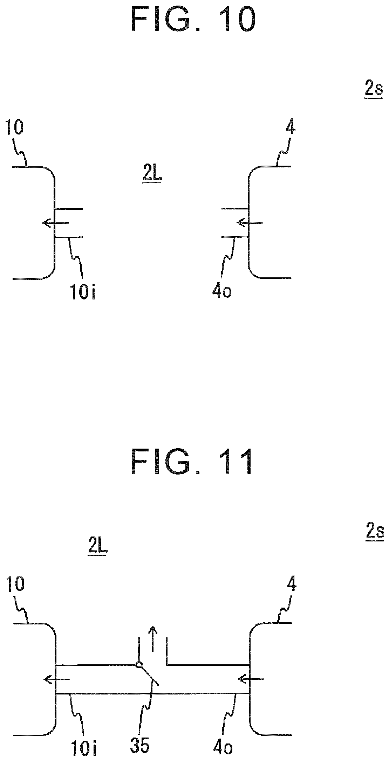

FIG. 10 illustrates still another embodiment of the present disclosure. In the embodiment illustrated in FIG. 10, the outlet 4o of the fine bubble fuel generator 4 communicates with the liquid region 2L of the fuel tank 2. In the embodiment illustrated in FIG. 10, the inlet 10i of the fuel pump 10 communicates with the liquid region 2L of the fuel tank 2. As a result, it is possible to generate the fine bubble fuel using the fine bubble fuel generator 4, irrespective of the amount of fuel that is pumped up by the fuel pump 10.

FIG. 11 illustrates still another embodiment of the present disclosure. In the embodiment illustrated in FIG. 11, a switching valve or a three-way valve 35 is provided. The switching valve 35 is configured to allow the outlet 4o of the fine bubble fuel generator 4 to communicate with one or both of the inlet 10i of the fuel pump 10 and the liquid region 2L of the fuel tank 2. In this case, as the amount of the fine bubble fuel flowing toward the fuel pump 10 increases, the amount of the fine bubble fuel flowing toward the liquid region 2L decreases.

In still another embodiment according to the present disclosure, two or more of the embodiments according to the present disclosure discussed above are combined with each other. For example, the mixed gas space 3 is formed of two or more of the internal space of the breather pipe 8, the internal space of the vapor pipe 23, the internal space of the vapor chamber 22v, and the internal space of the purge pipe 26, especially, the part of the purge pipe 26 upstream of the purge control valve 27.

## Claims

1. A fuel supply apparatus (1) for an internal combustion engine, comprising:
a fuel tank (2) configured to store a liquid fuel;
a mixed gas space defining portion that is provided outside the fuel tank (2) and that defines a mixed gas space that is filled with a mixed gas containing an evaporated fuel and air;
a fine bubble fuel generator (4) including a liquid fuel inlet (4iL) that communicates with a liquid region (2L) of the fuel tank (2) and a mixed gas inlet (4iG) that communicates with the mixed gas space defining portion, and configured to generate a fine bubble fuel, which is a liquid fuel containing fine bubbles of the mixed gas, from the liquid fuel supplied from the fuel tank (2) and the mixed gas supplied from the mixed gas space defining portion; and
a fuel supply unit (5) configured to supply the fine bubble fuel generated by the fine bubble fuel generator (4) to the internal combustion engine.

2. The fuel supply apparatus (1) according to claim 1, further comprising
a breather pipe (8) connecting a gas region of the fuel tank (2) and a fuel supply pipe (7) of the fuel tank (2) to each other, wherein:
the mixed gas space defining portion is the breather pipe (8); and
the mixed gas inlet (4iG) of the fine bubble fuel generator (4) communicates with the breather pipe (8).

3. The fuel supply apparatus (1) according to claim 2, further comprising:
a canister (22) configured to temporarily store the evaporated fuel;
a vapor pipe (23) connecting the gas region of the fuel tank (2) and a vapor chamber (22v) of the canister (22) to each other; and
a purge pipe (26) connecting the vapor chamber (22v) of the canister (22) and an intake passage downstream of a throttle valve (21) of the internal combustion engine to each other, wherein:
the mixed gas space defining portion is the vapor pipe (23); and
the mixed gas inlet (4iG) of the fine bubble fuel generator (4) communicates with the vapor pipe (23).

4. The fuel supply apparatus (1) according to claim 1, further comprising:
a canister (22) configured to temporarily store the evaporated fuel;
a vapor pipe (23) connecting a gas region of the fuel tank (2) and a vapor chamber (22v) of the canister (22) to each other; and
a purge pipe (26) connecting the vapor chamber (22v) of the canister (22) and an intake passage downstream of a throttle valve (21) of the internal combustion engine to each other, wherein:
the mixed gas space defining portion is the vapor pipe (23); and
the mixed gas inlet (4iG) of the fine bubble fuel generator (4) communicates with the vapor pipe (23).

5. The fuel supply apparatus (1) according to claim 1, further comprising:
a canister (22) configured to temporarily store the evaporated fuel;
a vapor pipe (23) connecting a gas region of the fuel tank (2) and a vapor chamber (22v) of the canister (22) to each other; and
a purge pipe (26) connecting the vapor chamber (22v) of the canister (22) and an intake passage downstream of a throttle valve (21) of the internal combustion engine to each other, wherein:
the mixed gas space defining portion is the purge pipe (26); and
the mixed gas inlet (4iG) of the fine bubble fuel generator (4) communicates with the purge pipe (26).

6. The fuel supply apparatus (1) according to claim 2, further comprising:
a canister (22) configured to temporarily store the evaporated fuel;
a vapor pipe (23) connecting the gas region of the fuel tank (2) and a vapor chamber (22v) of the canister (22) to each other; and
a purge pipe (26) connecting the vapor chamber (22v) of the canister (22) and an intake passage downstream of a throttle valve (21) of the internal combustion engine to each other, wherein:
the mixed gas space defining portion is the purge pipe (26); and
the mixed gas inlet (4iG) of the fine bubble fuel generator (4) communicates with the purge pipe (26).

7. The fuel supply apparatus (1) according to claim 1, further comprising:
a canister (22) configured to temporarily store the evaporated fuel;
a vapor pipe (23) connecting a gas region of the fuel tank (2) and a vapor chamber (22v) of the canister (22) to each other; and
a purge pipe (26) connecting the vapor chamber (22v) of the canister (22) and an intake passage downstream of a throttle valve (21) of the internal combustion engine to each other, wherein:
the mixed gas space defining portion is the vapor chamber (22v); and
the mixed gas inlet (4iG) of the fine bubble fuel generator (4) communicates with the vapor chamber (22v).

8. The fuel supply apparatus (1) according to claim 2, further comprising:
a canister (22) configured to temporarily store the evaporated fuel;
a vapor pipe (23) connecting the gas region of the fuel tank (2) and a vapor chamber (22v) of the canister (22) to each other; and
a purge pipe (26) connecting the vapor chamber (22v) of the canister (22) and an intake passage downstream of a throttle valve (21) of the internal combustion engine to each other, wherein:
the mixed gas space defining portion is the vapor chamber (22v); and
the mixed gas inlet (4iG) of the fine bubble fuel generator (4) communicates with the vapor chamber (22v).

9. The fuel supply apparatus (1) according to claim 3 or 4, wherein:
the mixed gas space defining portion is the purge pipe (26); and
the mixed gas inlet (4iG) of the fine bubble fuel generator (4) communicates with the purge pipe (26).

10. The fuel supply apparatus (1) according to any one of claims 3, 4 and 9, wherein:
the mixed gas space defining portion is the vapor chamber (22v); and
the mixed gas inlet (4iG) of the fine bubble fuel generator (4) communicates with the vapor chamber (22v).

11. The fuel supply apparatus (1) according to any one of claims 1 to 10, wherein an outlet (4o) of the fine bubble fuel generator (4) communicates with an inlet (10i) of the fuel supply unit (5).

12. The fuel supply apparatus (1) according to any one of claims 1 to 10, wherein an outlet (4o) of the fine bubble fuel generator (4) communicates with the liquid region (2L) of the fuel tank (2).

13. The fuel supply apparatus (1) according to any one of claims 1 to 10, further comprising a switching valve (35) configured to allow an outlet (4o) of the fine bubble fuel generator (4) to communicate with either one or both of an inlet (10i) of the fuel supply unit (5) and the liquid region (2L) of the fuel tank (2).

14. The fuel supply apparatus (1) according to any one of claims 1 to 13, wherein the fine bubble fuel generator (4) is accommodated in the fuel tank (2).

15. The fuel supply apparatus (1) according to any one of claims 1 to 14, wherein the fine bubble fuel is a liquid fuel containing ultra-fine bubbles of the mixed gas.
